Europäisches Patentamt

European Patent Office

Office européen des brevets

(19)

(11) Publication number: **0 186 971**
**A1**

(12)

# EUROPEAN PATENT APPLICATION

(21) Application number: 85308610.6

(22) Date of filing: 27.11.85

(51) Int. Cl.⁴: **A 01 N 39/02**
// (A01N39/02, 39:02, 37:40)

(30) Priority: 28.11.84 NZ 210363

(43) Date of publication of application: 09.07.86
Bulletin 86/28

(84) Designated Contracting States: AT BE CH DE FR GB IT
LI LU NL SE

(71) Applicant: IVON WATKINS-DOW LIMITED, 89 Paritutu
Road, New Plymouth (NZ)

(72) Inventor: Moffat, Robert Wilson, 93 Junction Road, New
Plymouth (NZ)
Inventor: Sharpe, Colin John, 13 Bronte Place, New
Plymouth (NZ)
Inventor: Lobb, Paul Garry, Victoria Road, RD4, New
Plymouth (NZ)

(74) Representative: Carter, Caroline Ann, ABEL & IMRAY
Northumberland House 303-306 High Holborn, London
WC1V 7LH (GB)

(54) Herbicidal compositions and methods.

(57) The growth and reproduction of many undesirable grass
weeds in association with broadleaf weeds in cereal and legume
crops can be selectively controlled and/or inhibited by applying to
the said weedy grasses or broadleaf plants or plant parts or soil
the novel herbicide composition which is comprised of 1 part by
weight active ingredient of methyl 2-[4-(2,4-dichlorophenoxy)-
phenoxy] propionate and either

(a) from 0.5 to 2 parts by weight active ingredient of (4-
chloro-2-methylphenoxy) butyric acid (MCPB), or an ester or oil-
soluble amine salt thereof, or

(b) from 0.3 to 3 parts by weight active ingredient of a
herbicidal compound mixture containing (I) 1 part by weight of 4-
(4-chloro-2-methylphenoxy) butyric acid, or an ester or oil-soluble
amine salt thereof, and (II) from 0.75 to 1.5 parts by weight of a
hydroxybenzonitrile compound selected from 3,5-dibromo-4-
hydroxy benzonitrile, 4-hydroxy-3,5-diiodobenzonitrile, and
esters thereof.

ACTORUM AG

# HERBICIDAL COMPOSITION AND METHODS

This invention is concerned with novel herbicidal compositions and methods for the control and/or inhibition of the growth and reproduction of plants of many undesirable annual and perennial monocotyledonous and dicotyledonous plants in graminaceous crops such as cereals and legume crops such as peas being grown for human or animal consumption.

The terms "herbicide" and "herbicidal" as used herein refer to materials or compositions which either effectively control all plants in a given locus or selectively control the growth of one or more plant species in the presence of other plants. The term "control" as used herein is inclusive of the actions of (1) killing (2) inhibiting growth, reproduction or proliferation and (3) removing, destroying or otherwise diminishing the occurrence and activity of plants and is applicable to any of the stated actions or combinations thereof.

The term "plant" as used herein is inclusive of germinating seeds, emerging seedlings and herbaceous vegetation including the roots and above ground portions.

The term "cereals" covers annual monocotyledonous crops grown for food production such as wheat, oats, barley and sorghum. The legume crops may be annual such as peas and lupins or perennials such as clover.

Control of weeds is a continuing problem. Although the use of herbicides has greatly increased in recent years there are still many practical problems associated with weed control which have not been satisfactorily resolved. In all cropping areas of the world both broadleaf (dicotyledonous) and grass (monocotyledonous) weeds are major

problems in cropping areas where cereal and legume crops are grown. Weed control in the major proportion of cereal and legume crops is obtained by applying post-emergent sprays of herbicides to the emerged crop and weeds. There is no one herbicide that will selectively control the total range of annual and perennial weeds that occur in these crops so it is normal practice for a combination of up to 3 or 4 herbicides to be applied at one time to control the range of broadleaf weeds occurring in a particular crop. The herbicides used for the selective control of grass weeds in cereal and legume crops are very specific in their activity and have little effect on broadleaf weeds at the rate of application used for grass weed control and normally are mixed with the broadleaf herbicides or applied as a separate treatment.

Post-emergent selective grass herbicides are used widely to control annual grasses such as Lolium rigidum, Avena fatua and perennial grasses such as Lolium perenne and Agrostis stolonifera. Examples of post-emergent selective grass herbicides include methyl N-benzoyl-N-(3-chloro-4-fluorophenyl)-2-aminopropionate (flamprop-methyl), 1,2-dimethyl-3,5-diphenylpyrazolium (difenzoquat), and methyl 2-[4-(2,4-dichlorophenoxy)phenoxy] propionate (diclofop-methyl). In particular, diclofop-methyl is used at an early stage of development of both the grass species and the crop in various crops but in cereals is usually used in combination with broadleaf herbicides which normally include some of the substituted phenoxyalkanoic herbicides such as 2,4-D, MCPA, dichlorprop and mecoprop.

"Antagonism" can be defined as the reduced activity of one chemical following its combination with another chemical. In other words, the sum of the effects of two or more chemicals when combined is less than the total effects of the chemicals when used alone. The fact that the mixing of certain substituted phenoxyalkanoic acids with diclofop-methyl can be antagonistic to the grass control obtained is well-known.

F. Qureshi and W. Vanden Born, 1979, "Interaction of Diclofop-methyl and MCPA on wild oats", Weed Science 27, 202-205, conclude "that the loss of activity of diclofop-methyl by MCPA (ester) can be accounted for by the effects of MCPA on uptake and metabolic conversion of diclofop-methyl".

W. A. Olson, 1979, "MCPA antagonism of wild oat control with diclofop", Dissertation Abstracts International B 1979 39, (10), conducted field, greenhouse and laboratory experiments to determine the extent and mechanism of MCPA antagonism of wild oat control with diclofop. "Wild oat control with the tank mixture of diclofop at 2.25 kg/ha and MCPA at 0.14 or 0.28 kg/ha was similar to the wild oat control of diclofop applied alone at 1.12 kg/ha. MCPA antagonism of wild oat control with diclofop increased as the post treatment temperature increased from 10° to 30°C. The results indicate that MCPA antagonism of wild oat control with diclofop results from MCPA inhibition of diclofop translocation in the phloem."

Roumeliotis, 1979, "Interactions between some wild oat herbicides and four chlorophenoxy compounds", PANS 25 (4): 425-430, investigated three wild oat herbicides benzoylprop-ethyl, flamprop-isopropyl, and flamprop-methyl, which were applied in mixtures with the chlorophenoxy herbicides 2,4-D, dichlorprop, MCPA and mecoprop. He concluded "all

- 4 -

mixtures induced significantly less suppression of growth in oats than that induced by the wild oat herbicides alone at the lower rates. This effect demonstrated the existence of antagonism between the three wild oat herbicides and the four chlorophenoxy compounds tested. Antagonism was inversely related to the amount of wild oat herbicides present in the mixture".

B. Shirtcliffe and J. Kaleta, 1977, "Wild oat control with Mataven tank mixed and time interval with MCPA ester", Research Report, Canada Weed Committee, Western Section, Part 1, 390-391, observed that "Wild oat control was reduced when flamprop-methyl was tank mixed with bromoxynil". In a further trial, the same authors, 1977, "Wild oat control with Mataven tank mixed and time intervals with bromoxynil/MCPA ester", Research Report, Canada Weed Committee, Western Section, Part 1, 391-392, reported "Wild oat control was reduced when flamprop-methyl was tank mixed with bromoxynil/MCPA ester".

A. Slater and B. Jones, 1978, "The compatibility of hydroxybenzonitrile based herbicides with other cereal sprays", Proceedings 1978 British Crop Protection Conference - Weeds 423-430, conducted trials with the iso-octyl esters of hydroxybenzonitriles in combination with various grass herbicides and reported that diclofop-methyl was the least compatible of those tested.

M. M. Schreiber and P. L. Orwick, 1978, "Antagonistic action of 2,4-DB on diclofop-methyl", Abstracts, 1977, Meeting Weed Science Society, America (1978) 3, observed field and glasshouse studies of the post emergence use of 2,4-DB in combination with diclofop-methyl for the control of weed grasses. Results "suggest that such combinations were less effective in controlling weed grasses than when diclofop-methyl was used alone".

J. Swarbrick, 1984, The Australian Weed Control Handbook, 7 Edit., 244, which is the current reference for product label claims in Australia states "Allow at least 10 days between any application of HOEGRASS (diclofop-methyl) and other herbicides containing 2,4-D, MCPA, dicamba and other similar type sprays, which should preferably follow HOEGRASS".

These references demonstrate the wide acceptance in the scientific literature and the commercial use of diclofop-methyl that antagonism by a range of substituted phenoxyalkanoic acids, whether they be salts or esters, does exist. In an endeavour to overcome this problem, the rate of application of diclofop-methyl may be increased compared with that when it is used alone, the timing of application may be varied, or it may be better to apply the grasskiller as a separate application up to 10 days from applying the broadleaf herbicides. This causes considerable management problems and greater cost to the user to obtain a satisfactory level of weed control.

One group of chemicals, the substituted phenoxyalkanoic acids, their salts and esters, have been and still are widely used for the selective control of broadleaf weeds in cereal and legume crops. The phenoxyacetic herbicides have been used on both cereal and pasture crops whereas the phenoxybutyric herbicides have mainly been used on legume crops or cereal crops under-sown with legumes due to their greater selectivity to legumes. The phenoxybutyric herbicides may also be formulated in mixtures with other broadleaf herbicides such as bromoxynil which contains the active ingredient 3,5-dibromo-4-hydroxybenzonitrile as an ester.

The object of this invention is to provide novel herbicide compositions and methods for the improved selective control of annual and perennial grass weeds in cereal and legume crops where diclopfop-methyl and similar post-emergent grass herbicides have to be mixed with substituted phenoxyalkanoic acids. By "improved" is meant that substantially no antagonism occurs when the mixture of herbicides is applied. Indeed, the degree of control of weed grasses is frequently greater than with the use of the grass herbicide alone, demonstrating synergism.

According to the present invention, it has been found that the growth and reproduction of many undesirable grass weeds in association with broadleaf weeds in cereal and legume crops can be selectively controlled and/or inhibited by applying to the said weedy grasses or broadleaf plants or plant parts or soil the novel herbicide composition which is comprised of 1 part by weight active ingredient of methyl 2-[4-(2,4-dichlorophenoxy)-phenoxy] propionate and either

(a)    from 0.5 to 2 parts by weight active ingredient of (4-chloro-2- methylphenoxy) butyric acid (MCPB), or an ester or oil-soluble amine salt thereof, or

(b)    from 0.3 to 3 parts by weight active ingredient of a herbicidal compound mixture containing (I) 1 part by weight of 4-(4-chloro-2-methylphenoxy) butyric acid, or an ester or oil-soluble amine salt thereof, and (II) from 0.75 to 1.5 parts by weight of a hydroxybenzonitrile compound selected from 3,5-dibromo-4-hydroxy benzonitrile, 4-hydroxy-3,5-diiodobenzonitrile, and esters thereof.

The esters, both of the phenoxyalkanoic acid compound and of the hydroxybenzonitrile compound, preferably have from 1 to 8 carbon atoms in the ester moiety.

The method of the invention for the control and/or inhibition of the growth and reproduction of many undesirable grass weeds and

0186971

- 7 -

broadleaf weeds in cereal or legume crops comprises applying to the weedy plant or plant parts or to their growth medium a growth altering amount of a composition as defined in the preceding paragraph.

The amount of the herbicide composition applied in the method of this invention is usually sufficient to apply 300 to 750 grams per hectare of methyl 2-[4-(2,4-dichlorophenoxy)phenoxy] propionate and 400 to 800 grams per hectare of 4-(4-chloro-2-methylphenoxy) butyric acid as an ester or oil-soluble amine salt or sufficient to apply 300 to 750 grams per hectare of methyl 2-[4-(2,4-dichlorophenoxy)phenoxy] propionate and 100 to 600 grams per hectare of 4-(4-chloro-2-methylphenoxy) butyric acid as an ester or oil-soluble amine salt in combination with 75 to 450 grams per hectare of 3,5-dibromo-4-hydroxy benzonitrile or 4-hydroxy-3,5-diiodobenzonitrile as esters.

The herbicidal compositions of the invention usually consist of the active ingredients in admixture with one or more diluents, adjuvants and/or carriers which are conventional in herbicide compositions. The compositions may, for example, be formulated as oil-miscible concentrates or emulsifiable concentrates. The compositions are conveniently applied to the plants or plant parts as diluted or ready to use spray.

A preferred method of the invention for selectively controlling grass and broadleaf weeds in cereal and legume crops comprises applying about 400 grams active ingredient of methyl 2-[4-(2,4-dichlorophenoxy)-phenoxy] propionate plus 200 grams active ingredient of 4-(4-chloro-2-methylphenoxy) butyric acid plus 200 grams active ingredient of 3,5-dibromo-4-hydroxy benzonitrile per hectare. This method substantially destroys all the weeds while still being selective to the

0186971

cereal and legume crop. The corresponding composition, which comprises 1 part by weight active ingredient of methyl 2-[4-(2,4-dichlorophenoxy) phenoxy] propionate plus 0.5 part by weight active ingredient of 4-(4-chloro-2-methylphenoxy) butyric acid as an ester or oil-soluble amine salt plus 0.5 part by weight active ingredient of 3,5-dibromo-4-hydroxy benzonitrile as an ester, is thus a preferred composition of the invention.

These novel compositions containing the esters of 4-(2-methyl-4-chlorophenoxy) butyric acid do not have any significantly antagonistic effect on methyl 2-[4-(2,4-dichlorophenoxy)phenoxy] propionate when the compounds are mixed and applied at the rates normally used for the control of broadleaf and grass weeds. This is quite unexpected when one considers the antagonism which occurs with other substituted phenoxyalkanoic acid compounds when mixed with methyl 2-[4-(2,4-dichlorophenoxy)phenoxy] propionate. The said compositions may instead have a synergistic activity as evidenced by an increased activity on grassy weeds and, in cereal crops, the admixture of herbicidal compounds in the compositions provides improved selectivity of the crop to both the broadleaf and grass weed herbicides used for control. These properties of the compositions of the present invention are deemed wholly novel and unexpected.

The invention is illustrated by the following non-limitative Composition and Trial Examples.

Composition 1.

A composition containing 550 grams per litre active ingredient 4-(2-methyl-4- chlorophenoxy) butyric acid (MCPB) as the isooctyl ester was prepared by mixing the following:

|  | grams/litre |
|---|---|
| MCPB Isooctyl ester (65.1% w/v) | 844.9 |
| GARDEMUL* C55 emulsifier | 65.0 |
| TERIC* 200 emulsifier | 35.0 |
| Aromatic solvent | 78.7 |
|  | ——— |
|  | 1023.6 |
|  | ——— |

Composition 2.

A composition containing 400 grams per litre active ingredient 4-(2-methyl-4- chlorophenoxy) butyric acid as the butyl ester was prepared by mixing the following:

|  | grams/litre |
|---|---|
| MCPB butyl ester (79.1% w/v) | 505.7 |
| GARDEMUL* C55 emulsifier | 60.0 |
| TERIC* 200 emulsifier | 40.0 |
| Aromatic solvent | 367.9 |
|  | ——— |
|  | 973.6 |
|  | ——— |

Composition 3.

A composition containing 200 grams per litre active ingredient 4-(2-methyl-4- chlorophenoxy) butyric acid (MCPB) as the isooctyl ester, and 150 grams per litre active ingredient 3,5-dibromo-4-

hydroxybenzonitrile (bromoxynil) as the octanoate ester was prepared by mixing the following:

|  | grams/litre |
|---|---|
| MCPB isooctyl ester (65% w/v) | 307.2 |
| bromoxynil octanoate (65% w/v) | 230.8 |
| GARDEMUL* C55 emulsifier | 56.0 |
| TERIC* 200 emulsifier | 24.0 |
| Aromatic solvent | 387.3 |
|  | ——— |
|  | 1005.3 |
|  | ——— |

Compositions 1-3 were used to prepare herbicidal compositions of the invention by mixing each, in appropriate proportions, with the conventional proprietary formulation of diclofop-methyl which is an emulsifiable concentrate containing 375 grams of methyl 2-[4-(2,4-dichlorophenoxy)phenoxy] propionate, for example to obtain tank mixtures of herbicidal compositions of the invention.

Composition 4

In addition to tank mixtures of compositions 1-3 with the proprietary formulation of diclofop-methyl, a composition containing 150 grams per litre active ingredient 4-(2-methyl-4-chlorophenoxy)-butyric acid as the isooctyl ester, 113 grams per litre active ingredient 3,5-dibromo-4-hydroxybenzonitrile as the octanoate ester and 188 grams per litre active ingredient methyl 2-[4-(2,4-dichlorophenoxy)phenoxy]propionate was prepared by mixing the following:

|                                        | grams/litre |
|----------------------------------------|-------------|
| MCPB isooctyl ester (65% w/v)          | 230         |
| bromoxynil n octanoyl ester (63% w/v)  | 180         |
| diclofop methyl (93% w/v)              | 202         |
| emulsifiers                            | 180         |
| Aromatic solvent                       | 320         |
|                                        | 1112        |

In the following Examples the compositions and method of the present invention were employed for the control of broadleaf and grass weeds in annual cereal and legume crops and broadleaf weeds in clover (Trifolium sp) pastures.

The major weeds on the field sites are noted in the particular Examples. Application of the compositions and method in the Examples were:

(a) A precision hand broadcast sprayer calibrated to apply 200-300 litres per hectare at a nozzle pressure of 250-300 kPa.

(b) A precision hand broadcast sprayer calibrated to apply 90 litres per hectare at a nozzle pressure of 250 kPa.

In Examples 1 to 6 the treatments for the field trials were applied during the period from early autumn to late spring when the broadleaf weeds were in the 2-6 leaf stage of growth and the grass weeds were in the 1-5 leaf stage of growth or, in the case of perennial ryegrass, (Lolium perenne), mature plants. At the times of treatment, the stage of growth of the clover ranged from the first trifoliate leaf through to mature stolons and the cereal crops ranged from 2 leaf to early tillering stage.

The two trials reported in Examples 3 and 4 were conducted under conditions ideal for vigorous growth of the crop and weeds. The two trials reported in Examples 5 and 6 were conducted in the same region in the following year under drought conditions when both the crop and the weeds were under severe stress which limited growth.

A standard method was used for the evaluation of control of wild oats or cultivated oats grown under glass. The seed was sown in trays containing soil and 10 plants were selected per tray. The herbicide compositions were applied with a belt sprayer at 300 litres per hectare at a nozzle pressure of 200 kPa. Plants were treated at the 2-4 leaf stage and harvested 21 days after treatment with the fresh weight of all foliage being recorded. Each treatment was replicated three times. The mean fresh weights were used as a measure of growth suppression caused by the various herbicide compositions.

The following data are the results of the herbicidal composition effects on the named plants wherein the treated plant growths are expressed as a percent of the growth of untreated plants at the same locus. The "observed growth" measurements are the mean of at least two independent visual observations of the treated plant. In some instances actual counts have been made of surviving treated weed plants per unit areas and expressed as a percentage of the standard treatment. Mean crop yields were determined by harvesting with a self propelled small plot harvester and results expressed as tonnes per hectare of grain.

0186971

- 13 -

The abbreviations used in the Tables are as follows;

MCPB-E = isooctyl ester of 4-(2-methyl-4-chlorophenoxy) butyric acid.

MCPB-Na = sodium salt of 4-(2-methyl-4-chlorophenoxy) butyric acid.

diclofop methyl (DM) = methyl 2-[4-(2,4-dichlorophenoxy) phenoxy] propionate.

MCPA/BROM = 4-chloro-2-methylphenoxy acetic acid as the butyl ester/3,5-dibromo-4-hydroxybenzonitrile as the octanoate ester.

MCPB/BROM = isooctyl ester of 4-(2-methyl-4-chlorophenoxy) butyric acid/octanoate ester of 3,5-dibromo-4-hydroxy-benzonitrile.

MCPA-E = isooctyl ester of 4-chloro-2-methyl phenoxy acetic acid.

SURF = A non-ionic surfactant included in spray mix at 0.25% v/v.

- 14 -

A. FIELD TRIALS

Example 1

Responses 6 weeks after application of the herbicide compositions on cultivated oats, Avena sativa cv. Caravelle, are summarized in Table 1.

TABLE 1

| Herbicide Compositions | g ai/ha | Control of Oats 0=No control 100=Complete Control |
|---|---|---|
| I MCPB/BROM + DM | 150/112 + 540 | 62 |
| II MCPB/BROM + DM | 300/225 + 540 | 58 |
| III MCPB/BROM + DM | 600/450 + 540 | 45 |
| IV MCPB-E + DM | 820 + 540 | 57 |
| V MCPB-Na + DM | 820 + 540 | 25 |
| VI MCPA/BROM + DM | 300/300 + 540 | 22 |
| VII DM | 540 | 18 |

Compositions I, II, III and IV gave greatly improved control over compositions V, VI and VII which were similar.

Example 2

Responses 8 weeks after application of the herbicide compositions on wild oats, Avena fatua, are summarized in Table 2.

TABLE 2

| Herbicide Compositions | | g ai/ha | Control of Oats<br>0=No control<br>100=Complete Control |
|---|---|---|---|
| I | MCPB/BROM + DM | 150/112 + 540 | 35 |
| II | MCPB/BROM + DM | 300/225 + 540 | 35 |
| III | MCPB/BROM + DM | 600/450 + 540 | 65 |
| IV | MCPB-E + DM | 825 + 540 | 65 |
| V | MCPB-Na + DM | 825 + 540 | 45 |
| VI | MCPA/BROM + DM | 300/300 + 540 | 8 |
| VII | DM | 540 | 45 |
| CV | 34% | | |
| LSD | .05 | | 19 |

Composition VI gave a significantly lower level of control than composition VII. Compositions I, II, III, IV and V gave similar or better wild oat control than the standard composition VII.

- 16 -

<u>Example 3</u>

Responses 8 weeks after application of the herbicide compositions on annual ryegrass, <u>Lolium rigidum,</u> and yields of wheat are summarized in Table 3.

<u>TABLE 3</u>

| Herbicide Compositions | | g ai/ha | Mean Plants/ sq.m. | Control Index | Yield Wheat Tonnes/ha |
|---|---|---|---|---|---|
| I | MCPB/BROM + DM | 150/112 + 375 | 3 | 96 | 2.39 |
| II | MCPB/BROM + DM | 200/150 + 375 | 2 | 98 | 2.37 |
| III | MCPB/BROM + DM | 300/225 + 375 | 3 | 96 | 2.55 |
| IV | MCPB/BROM + DM | 600/450 + 375 | 2 | 98 | 2.56 |
| V | MCPA/BROM + DM | 200/200 + 375 | 7 | 92 | 2.36 |
| VI | MCPA/BROM + DM | 600/600 + 375 | 13 | 85 | 1.99 |
| VII | DM | 375 | 0 | 100 | 2.29 |
| VIII | UNTREATED | | 85 | | 1.47 |
| LSD | 5% | | 12 | | 0.19 |
| CV | 5.6% | | | | |

Compositions I-IV had no noticeable effect on the level of ryegrass control attained by composition VII. Both compositions V and VI gave a reduced level of control. Compositions I-IV gave a significantly greater yield of wheat than compositions VI and VIII.

Example 4

Responses 13 weeks after application of the herbicide compositions on wild oat, *Avena fatua*, and yields of wheat are summarized in Table 4.

TABLE 4

| Herbicide Compositions | g ai/ha | Mean Plants/ sq.m. | Control Index | Crop Yield Tonnes/ha |
|---|---|---|---|---|
| I MCPB/BROM + DM | 150/112 + 562 | 45.6 | 81.9 | 1.07 |
| II MCPB/BROM + DM | 200/150 + 562 | 67.5 | 73.3 | 1.05 |
| III MCPB/BROM + DM | 300/225 + 562 | 83.8 | 66.8 | 0.93 |
| IV MCPB/BROM + DM | 600/450 + 562 | 100 | 56.4 | 0.84 |
| V MCPA/BROM + DM | 200/200 + 562 | 106.2 | 57.9 | 0.68 |
| VI MCPA/BROM + DM | 600/600 + 562 | 125.6 | 50.3 | 0.41 |
| VII                DM | 562 | 50 | 80.2 | 0.96 |
| VIII UNTREATED | | 252.5 | 0 | 0.32 |

CV = 26%

LSD 5%                                          41                              0.21

Compositions I, II, III gave a similar level of wild oat control to Composition VII with the reduction in activity starting to appear in Composition IV. Composition IV has twice the amount of active ingredient expected to be required for satisfactory broadleaf weed control. Composition VI gave significantly poorer wild oat control than the standard Composition VII and Composition V was also at a lower level.

Compositions I, II, III, IV and VII gave similar crop yields. Compositions V, VI and VIII gave reduced yields.

0186971

- 18 -

Example 5

Responses 7 weeks after application of the herbicide compositions and annual ryegrass, Lolium rigidum, in wheat are summarized in Table 5.

TABLE 5

| Herbicide Compositions | g ai/ha | Mean Plants/ sq.m. | Control Index |
|---|---|---|---|
| I DM + SURF | 375 | 36 | 85 |
| II DM + MCPB/BROM | 375 + 200/150 | 19 | 92 |
| III DM + MCPB/BROM | 375 + 300/225 | 14 | 94 |
| IV DM + MCPB/BROM | 375 + 600/450 | 14 | 94 |
| V DM + MCPA/BROM | 375 + 200/200 | 46 | 80 |
| VI DM + MCPA/BROM | 375 + 300/300 | 51 | 78 |
| VII DM + SURF | 562 | 30 | 87 |
| VIII DM + MCPB/BROM | 562 + 200/150 | 10 | 96 |
| IX DM + MCPB/BROM | 562 + 300/225 | 9 | 96 |
| X DM + MCPB/BROM | 562 + 600/450 | 11 | 95 |
| XI DM + MCPA/BROM | 562 + 200/200 | 22 | 91 |
| XII DM + MCPA/BROM | 562 + 300/300 | 20 | 91 |
| XIII UNTREATED CONTROL | - | 232 | 0 |
| LSD 5% | | 14 | |
| CV 25% | | | |

- 19 -

Compositions III and IV gave significantly better control of ryegrass than the standard treatment, namely Composition I, and Compositions V and VI. Composition II also gave improved control to Compositions I, V and VI. Compositions VIII, IX and X gave significantly better control of ryegrass than Composition VII, the standard treatment.

Example 6

Responses 13 weeks after application of the herbicide compositions on wild oats, Avena fatua, in wheat are summarized in Table 6.

TABLE 6

| Herbicide Compositions | g ai/ha | Mean Plants/ sq.m. | Control Index |
|---|---|---|---|
| I DM + SURF | 562 | 0 | 100 |
| II DM + MCPB/BROM | 562 + 200/150 | 14 | 89 |
| III DM + MCPB/BROM | 562 + 300/225 | 13 | 89 |
| IV DM + MCPB/BROM | 562 + 600/450 | 23 | 82 |
| V DM + MCPA/BROM | 568 + 200/200 | 28 | 77 |
| VI DM + MCPA/BROM | 562 + 300/300 | 37 | 70 |
| VII UNTREATED CONTROL | - | 123 | 0 |
| LSD 5% | | 22 | |

Composition VI gave significantly poorer control of wild oats than compositions I, II and III.

- 20 -

<u>B.</u>  <u>GLASSHOUSE TRIALS</u>

<u>Example 7</u>

The mean fresh weight yields of wild oats, <u>Avena fatua</u>, 21 days following the application of herbicide compositions are summarized in Table 7.

<u>TABLE 7</u>

| Herbicide Compositions | g ai/ha | Mean fresh weight gms |
|---|---|---|
| I DM + SURF | 2000 | 8.3 |
| II MCPA-E | 400 | 9.1 |
| III MCPA-E | 600 | 11.4 |
| IV DM + MCPA-E | 2000 + 400 | 10.5 |
| V DM + MCPA-E | 2000 + 600 | 10.0 |
| VI MCPB-E | 400 | 15.4 |
| VII MCPB-E | 600 | 13.8 |
| VIII DM + MCPB-E | 2000 + 400 | 2.9 |
| IX DM + MCPB-E | 2000 + 600 | 2.1 |
| X UNTREATED | - | 12.0 |
| LSD 5% | | 1.2 |
| CV 1.5% | | |

Compositions IV and V formed by the combination of compositions II and III with the standard composition I gave significant decreases in plant suppression compared with composition I demonstrating antagonism.

Compositions VIII and IX formed by the combination of compositions VI and VII with the standard composition I gave significant increases in plant suppression compared with composition I demonstrating synergism.

Example 8

The mean fresh weight yields of cultivated oats, Avena sativa cv. caravelle, 21 days following the application of herbicide compositions are summarized in Table 8.

TABLE 8

| Herbicide Compositions | g ai/ha | Mean fresh weight gms |
|---|---|---|
| I DM + SURF | 1200 | 5.6 |
| II MCPB/BROM | 200/150 | 6.7 |
| III MCPB/BROM | 600/450 | 6.0 |
| IV DM + MCPB/BROM | 1200 + 200/150 | 3.8 |
| V DM + MCPB/BROM | 1200 + 600/450 | 2.9 |
| VI BROM | 150 | 9.9 |
| VII BROM | 450 | 9.5 |
| VIII DM + BROM | 1200 + 150 | 5 |
| IX DM + BROM | 1200 + 450 | 4.9 |
| X MCPA/BROM | 200/200 | 8.7 |
| XI MCPA/BROM | 600/600 | 8.7 |
| XII DM + MCPA/BROM | 200 + 200/200 | 7.7 |
| XIII DM + MCPA/BROM | 1200 + 600/600 | 8.1 |
| XIV UNTREATED CONTROL | - | 7.8 |
| LSD 5% | | 1.1 |
| CV 9.4% | | |

- 22 -

Compositions IV and V formed by the combination of compositions II and III with the standard composition I gave significant increases in plant suppression compared with composition I demonstrating synergism.

Compositions VIII and IX formed by the combination of compositions VI and VII with the standard composition I gave no significant differences in plant suppression compared with composition I. There was no antagonism or synergism.

Compositions XII and XIII formed by the combination of compositions X and XI with the standard composition I gave significant decreases in plant suppression compared with composition I demonstrating antagonism.

Example 9

The mean fresh weight yields of cultivated oats, Avena sativa cv. caravelle, 21 days following the application of herbicide compositions are summarized in Table 9.

TABLE 9

| Herbicide Compositions | g ai/ha | Mean fresh weight gms |
|---|---|---|
| I DM + SURF | 1200 | 9.6 |
| II MCPB-E | 200 | 10.7 |
| III MCPB-E | 600 | 12.5 |
| IV DM + MCPB-E | 1200 + 200 | 1.5 |
| V DM + MCPB-E | 1200 + 600 | 1.1 |
| VI UNTREATED CONTROL | – | 12.7 |
| LSD 5% | | 1.1 |
| CV 10% | | |

0186971

- 23 -

Compositions IV and V formed by the combination of compositions II and III with the standard composition I gave significant increases in plant suppression compared with composition I demonstrating synergism.

WHAT WE CLAIM IS:

1.    A herbicide composition which comprises 1 part by weight active ingredient of methyl 2-[4-(2,4-dichlorophenoxy)-phenoxy] propionate and either

(a)    from 0.5 to 2 parts by weight active ingredient of (4-chloro-2-methylphenoxy) butyric acid or an ester or oil-soluble amine salt thereof, or

(b)    from 0.3 to 3 parts by weight active ingredient of a herbicidal compound mixture containing (I) 1 part by weight of 4-(4-chloro-2-methylphenoxy) butyric acid, or an ester or oil-soluble amine salt thereof, and (II) from 0.75 to 1.5 parts by weight of a hydroxybenzonitrile compound selected from 3,5-dibromo-4-hydroxy benzonitrile, 4-hydroxy-3,5-diiodobenzonitrile, and esters thereof.

2.    A composition according to claim 1 which comprises 1 part by weight active ingredient of methyl 2-[4-(2,4-dichlorophenoxy)phenoxy] propionate plus 0.5 part by weight active ingredient 4-(4-chloro-2-methylphenoxy) butyric acid as an ester or oil-soluble amine salt plus 0.5 part by weight active ingredient 3,5-dibromo-4-hydroxy benzonitrile as an ester.

3.    A composition according to claim 1 or claim 2 wherein the 4-(2-methyl-4-chlorophenoxy) butyric acid is present as the butyl or isooctyl ester.

4. A composition according to any one of claims 1 to 3 wherein the hydroxybenzonitrile compound is the octanoate ester of 3,5-dibromo-4-hydroxy benzonitrile.

5. A composition according to any one of claims 1 to 4 which comprises the active ingredients in admixture or conjunction with one or more diluents, adjuvants and/or carriers suitable for herbicide compositions.

6. A composition according to any one of claims 1 to 5 formulated as an oil-miscible concentrate or emulsifiable concentrate.

7. A composition according to any one of claims 1 to 5 formulated as a diluted or ready to use spray.

8. A method for the control and/or inhibition of the growth and reproduction of many undesirable grass weeds and broadleaf weeds in cereals or legume crops, which method comprises applying to the weedy plant or plant parts or to their growth medium a growth altering amount of a composition which is comprised of 1 part by weight active ingredient of methyl 2-[4-(2,4- dichlorophenoxy)-phenoxy] propionate and either

(a) from 0.5 to 2 parts by weight active ingredient of (4-chloro-2-methylphenoxy) butyric acid or an ester or oil-soluble amine salt thereof, or

(b) from 0.3 to 3 parts by weight active ingredient of a herbicidal compound mixture containing (I) 1 part by weight of 4-(4-chloro-2-methylphenoxy) butyric acid, or an ester or oil-soluble amine salt thereof, and (II) from 0.75 to 1.5 parts by weight of a hydroxybenzonitrile compound selected from 3,5-dibromo-4-hydroxy

0186971

- 26 -

benzonitrile, 4-hydroxy-3,5-diiodobenzonitrile, and esters thereof.

9.   A method according to claim 8 which comprises applying 300 to 750 grams per hectare of methyl 2-[4-(2,4-dichlorophenoxy)phenoxy] propionate and 400 to 800 grams per hectare of 4-(4-chloro-2-methylphenoxy) butyric acid as an ester or oil-soluble amine salt.

10.   A method according to claim 8 which comprises applying 300 to 750 grams per hectare of methyl 2-[4-(2,4-dichlorophenoxy)phenoxy] propionate and 100 to 600 grams per hectare of 4-(4-chloro-2-methylphenoxy) butyric acid as an ester or oil-soluble amine salt and 75 to 450 grams per hectare of 3,5-dibromo-4-hydroxy benzonitrile or 4-hydroxy-3,5-diiodobenzonitrile as an ester thereof.

11.   A method according to claim 8 or claim 10 which comprises applying about 400 grams active ingredient of methyl 2-[4-(2,4-dichlorophenoxy)-phenoxy] propionate plus 200 grams active ingredient of 4-(4-chloro-2-methylphenoxy) butryric acid as an ester or oil-soluble amine salt plus 200 grams active ingredient 3,5-dibromo-4-hydroxy benzonitrile as an ester per hectare.

12.   A method according to claim 8 which comprises applying a composition according to any one of claims 1 to 5 as a diluted or ready to use spray.

13. A method of making a herbicidal preparation which comprises preparing a mixture comprising 1 part by weight of methyl 2-[4-(2,4-dichlorophenoxy)phenoxy] propionate and either

(a) from 0.5 to 2 parts by weight of (4-chloro-2-methylphenoxy) butyric acid or an ester or oil-soluble amine salt thereof, or

(b) from 0.3 to 3 parts by weight of (i) and (ii) wherein (i) is 1 part by weight of 4-(4-chloro - 2-methylphenoxy) butyric acid or an ester or oil-soluble amine salt thereof, and (ii) is a total of from 0.75 to 1.5 parts by weight of one or more hydroxybenzonitrile compounds selected form 3,5-dibromo-4-hydroxy benzonitrile, 4-hydroxy-3,5-diiodobenzonitrile, and esters thereof.

14. A method of treatment which comprises applying to plants or their growth medium 1 part by weight of methyl 2-[4-(2,4-dichlorophenoxy)-phenoxy] propionate and either

(a) from 0.5 to 2 parts by weight of (4-chloro-2-methylphenoxy) butyric acid or an ester or oil-soluble amine salt thereof, or

(b) from 0.3 to 3 parts by weight of (i) and (ii) wherein (i) is 1 part by weight of 4-(4-chloro-2-methylphenoxy) butyric acid, or an ester or oil-soluble amine salt thereof and (ii) is a total of 0.75 to 1.5 parts by weight of one or more hydroxybenzonitrile compounds selected from 3,5-dibromo-4-hydroxy benzonitrile, 4-hydroxy-3,5-diiodobenzonitrile, and esters thereof.

## EUROPEAN SEARCH REPORT

European Patent
Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 137 092 (ICI)<br><br>* Page 3, line 25 - page 4, line 41; claims 1,4,5 * | 1,3,5-8,12-14 | A 01 N 39/02 //<br>(A 01 N 39/02<br>A 01 N 39:02<br>A 01 N 37:40 ) |
| A | EP-A-0 001 328 (FISONS)<br><br>* Page 3, line 18 - page 4, line 5; page 4, line 17 - page 7, line 7; page 9, line 20 - page 10, line 20 * | 1,3,5-9-12-14 | |
| A | CHEMICAL ABSTRACTS, vol. 87, no. 1, 4th July 1977, page 98, no. 1075m, Columbus, Ohio, US; P.A. O'SULLIVAN et al.: "Influence of herbicides for broad-leaved weeds and adjuvants with dichlorfop methyl on wild oat control", & CAN. J. PLANT. SCI. 1977, 57(1), 117-25<br>* Whole abstract *<br><br>---     -/- | 1-3,8-14 | |

TECHNICAL FIELDS SEARCHED (Int. Cl.4)

A 01 N

The present search report has been drawn up for all claims

| Place of search | Date of completion of the search | Examiner |
|---|---|---|
| THE HAGUE | 19-03-1986 | FLETCHER A.S. |

| DOCUMENTS CONSIDERED TO BE RELEVANT | | | Page 2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | CHEMICAL ABSTRACTS, vol. 93, no. 17, 27th October 1980, page 191, no. 162549h, Columbus, Ohio, US; H. WALTER et al.: "Combination effects in joint applications of diclofop-methyl with other postemergence herbicides", & Z. PFLANZENKR. PFLANZENSCHUTZ 1980, 87(4), 210-20 * Whole abstract * | 1,8,13 ,14 | |
| A | CHEMICAL ABSTRACTS, vol. 72, no. 7, 16th February 1970, page 201, no. 30528g, Columbus, Ohio, US; K. MADDENS et al.: "Application of foliar herbicides in the cultivation of flax", & REV. AGR. 1969, 22(6-7). 919-40 * Whole abstract * | 1,8,13 ,14 | |
| A | GB-A-2 042 339 (LILLY INDUSTRIES) * Examples; claims * | 1,2,4- 14 | TECHNICAL FIELDS SEARCHED (Int. Cl.4) |

The present search report has been drawn up for all claims

| Place of search | Date of completion of the search | Examiner |
|---|---|---|
| THE HAGUE | 19-03-1986 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document